Europäisches Patentamt

European Patent Office

Office européen des brevets

(19)

(11) Veröffentlichungsnummer: **0 232 462 B1**

## EUROPÄISCHE PATENTSCHRIFT

(12)

(45) Veröffentlichungstag der Patentschrift: **09.09.92**

(51) Int. Cl.5: **G02C 5/16**, G02C 5/14

(21) Anmeldenummer: **86113580.4**

(22) Anmeldetag: **02.10.86**

(54) **Bügel für eine Brille.**

(30) Priorität: **12.02.86 DE 3604358**

(43) Veröffentlichungstag der Anmeldung:
**19.08.87 Patentblatt 87/34**

(45) Bekanntmachung des Hinweises auf die
Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
EP-A- 0 174 392          FR-A- 1 028 629
GB-A- 274 287            US-A- 2 503 275
US-A- 2 856 813          US-A- 3 612 668
US-A- 3 854 801          US-A- 4 389 102

(73) Patentinhaber: **EYEMETRICS-SYSTEMS AG
Steinbockstrasse 4
CH-7001 Chur(CH)**

(72) Erfinder: **EYEMETRICS-SYSTEMS AG
Steinbockstrasse 4
CH-7001 Chur(CH)**

(74) Vertreter: **Grams, Klaus Dieter, Dipl.-Ing. et al
Patentanwaltsbüro Tiedtke-Bühling-Kinne-
Grupe-Pellmann-Grams-Struif Winter-Roth
Bavariaring 4
W-8000 München 2(DE)**

## Beschreibung

Der Erfindung bezieht sich auf einen Bügel für eine Brille mit einem länglichen, im wesentlichen geraden Schaft, der an seinem ersten Schaftende mittels eines Scharniers mit einer Backe oder einem Gelenkstück der Brille verbindbar ist, und mit einem Bügelendstück, das einen länglichen, im wesentlichen geraden ersten Abschnitt, der in Verlängerung des Schaftes verläuft, und einen sich an den ersten Abschnitt anschließenden, länglichen zweiten Abschnitt aufweist, der vom ersten Abschnitt aus unter Einschluß eines Winkels kleiner als 180° nach unten verläuft.

Ein solcher Bügel ist grundsätzlich bekannt. Der zweite Abschnitt des Bügelendstücks hat die Funktion, entweder selber hinter dem Ohr am Schädel eines Brillenträgers anzuliegen oder einen weiteren Abschnitt des Bügelendstücks abzustützen, der am Schädel und/oder am Ohr des Brillenträgers anliegt. Auf jeden Fall soll durch die Anlage des zweiten Abschnitts oder des von ihm getragenen weiteren Abschnitts dafür gesorgt werden, daß der Bügel zusammen mit einem gleichartigen zweiten Bügel auf der anderen Seite des Kopfes und zusammen mit einer Stegpartie der Brille die Brille zuverlässig am Kopf des Brillenträgers hält und abstützt. Der Bügel kann diese Aufgabe um so eher erfüllen, je besser er der individuellen Ohr- und Kopfgeometrie des Brillenträgers angepaßt ist. Zur Kopfgeometrie gehört auch die Innenneigung der Kontaktfläche am Kopf und/oder am Ohr, der die Innenneigung des zweiten Abschnitts des Bügelendstücks folgen sollte. Herkömmliche Bügelendstücke der genannten Art werden jedoch grundsätzlich mit ein und derselben Innenneigung gefertigt, wobei dann allenfalls durch plastisches Verformen von seiten beispielsweise des anpassenden Augenoptikers der Versuch gemacht wird, eine geeignete Innenneigung des Bügelendstücks bzw. des zweiten Abschnitts herbeizuführen. Diese Anpassung erfolgt zumeist zugleich mit der Anpassung der Länge des Bügels. Da es sich hierbei um einen Vorgang des Anprobierens handelt, ist das Ergebnis oft unzureichend, was zu verhältnismäßig schlechtem Tragekomfort der Brille führt.

Eine Brille mit den Merkmalen des Oberbegriffs von Patentanspruchs 1 gehört aufgrund der europäischen Patentanmeldung EP-A-0 174 392 zum Stand der Technik (nach §54(3) EPÜ). Diese bekannte Brille weist zwischen dem Bügelschaft und dem Bügelendstück eine Steckverbindung auf, die es ermöglicht, durch Ablängen des Bügelschaftes vor dem Zusammenfügen desselben mit dem Bügelendstück für eine geeignete Länge des Bügels zu sorgen. Möglichkeiten, die Innenneigung des Bügelendstücks bzw. seines zweiten Abschnitts zu beeinflussen, bestehen dabei jedoch nicht. Vielmehr weisen die im ersten Abschnitt des Bügelendstücks ausgebildete Bohrung sowie der vom zweiten Schaftende gebildete Zapfen ein ungefähr rechteckiges Profil auf, durch das die Innenneigung des Bügelendstücks vorgegeben ist.

Die Patentschrift US-A-3 612 668 beschreibt einen Bügel mit den Merkmalen des Oberbegriffs von Anspruch 1, bei welchem Bügel die Innenneigung des Bügelendstücks ebenfalls durch dessen rechteckiges Profil vorgegeben ist.

Der Erfindung liegt die Aufgabe zugrunde, den gattungsgemäßen Bügel dahingehend auszubilden, daß das Herbeiführen bzw. Einstellen einer gewünschten Innenneigung der Bügelendstücks bzw. seines zweiten Abschnitts auf einfache und zuverlässige Weise möglich ist.

Diese Aufgabe wird erfindungsgemäß durch die Merkmale im kennzeichnenden Teil von Patentanspruch 1 gelöst, d.h. im wesentlichen dadurch, daß zumindest die Umfangswand der Bohrung oder des Zapfens im wesentlichen zylindrisch ist und daß von der anderen Umfangswand radial Stege bzw. Leisten vorstehen, die in Axialrichtung der Bohrung verlaufen und in Eingriff mit der im wesentlichen zylindrischen Umfangswand stehen. Durch die im wesentlichen zylindrische Form der einen Umfangswand ist dafür gesorgt, daß der Zapfen in die Bohrung unter beliebigem Drehwinkel des einen Elementes (erster Abschnitt oder Schaft) relativ zum anderen Element eingesteckt werden kann, um auf diese Weise eine vorgegebene bzw. gewünschte Innenneigung des Bügelendstücks einzustellen. Durch den Eingriff der zumindest einen in Axialrichtung verlaufenden Leiste mit der Umfangswand ist die Steckverbindung gerade in Umfangsrichtung des Zapfens besonders steif, so daß der eingestellte Neigungswinkel durch diesen Eingriff fixiert ist. Die zumindest eine Leiste bildet somit zusammen mit demjenigen Bereich der Umfangswand, in den sie eingreift, beim erfindungsgemäßen Bügel die Fixiereinrichtung der Steckverbindung. Darüber hinaus kann allerdings die Fixierung noch unterstützt sein durch weitere kraft- und/oder formschlüssige Eingriffe zwischen dem Zapfen und der Bohrung.

In vorteilhafter Ausbildung der Erfindung ist vorgesehen, daß sich mehrere axial verlaufenden Leisten am geschlossenen Ende der Bohrung befinden und nur über einen Teil der Länge der Bohrung erstrecken. Dies ermöglicht es, den im wesentlichen zylindrischen Zapfen zunächst gleitend in die Bohrung einzuführen, ohne daß bereits eine Fixierung erfolgt. In diesem Zustand wird dann die gewünschte Innenneigung, d. h. der Drehwinkel zwischen dem Bügelendstück und dem Schaft, eingestellt. Wenn dieser erreicht ist, wird der Zapfen vollständig in die Bohrung eingeschoben, wobei dann die Leisten in Eingriff mit der Umfangswand am freien Ende des Zapfens treten und dabei einen zugleich form-und kraftschlüssigen Eingriff herbeiführen, durch den das Bügelendstück und der Schaft fest miteinander verbunden werden.

Die vorstehend erläuterte Möglichkeit, das Bügelendstück und den Schaft in zwei Schritten in der Weise miteinander zu verbinden, daß zunächst der Zapfen lediglich teilweise eingeschoben wird und dabei die Innenneigung des Bügels eingestellt wird, wonach der Zapfen ganz eingeschoben wird, während gleichzeitig die Fixierung erfolgt, besteht auch bei einer Steckverbindung, bei der die in Axialrichtung verlaufenden Leisten am Zapfen ausgebildet sind. In diesem Fall weist dann vorzugsweise die Bohrung nahe ihrem geschlossenen Ende einen verengten Abschnitt auf oder sind die Leisten nur über einen Teil der Länge des Zapfens an dessen dem offenen Bohrungsende zugeordneten Bereich ausgebildet.

In weiterer vorteilhafter Ausbildung der Erfindung kann vorgesehen sein, daß die im wesentlichen zylindrische Umfangswand, die nicht mit den Leisten versehen ist, eine Vielzahl von umlaufenden Rillen aufweist. Durch das Zusammenwirken dieser Rillen und der zwischen ihnen vorhandenen, umlaufenden Stege mit den in Längsrichtung der Bohrung und des Zapfens verlaufenden Leisten verzahnen sich die Leisten und die Stege miteinander in der Weise, daß eine besonders feste Fixierung erreicht ist. Dieser Effekt tritt insbesondere dann ein, wenn, wie dies vorzugsweise der Fall ist, sowohl der Zapfen als auch die Umfangswand der Bohrung aus einem Kunststoff bestehen. Für diesen Zweck besonders geeignete Kunststoffe sind Polyetherimide.

Weitere Vorteile und Merkmale der Erfindung ergeben sich aus den Unteransprüchen sowie der folgenden Beschreibung von Ausführungsbeispielen.

Ausführungsbeispiele der Erfindung sind in den Zeichnungen dargestellt und werden im folgenden näher erläutert. Es zeigen:

Fig. 1    eine Seitenansicht eines Bügels gemäß einem ersten Ausführungsbeispiel;

Fig. 2    eine vergrößerte Schnittdarstellung gemäß A-B in Fig. 1;

Fig. 3    eine vergrößerte Schnittdarstellung gemäß C-D in Fig. 1;

Fig. 4    eine vergrößerte Schnittdarstellung gemäß E-F in Fig. 1;

Fig. 5    eine Draufsicht auf den Bügel gemäß Fig. 1;

Fig. 6    eine Ansicht des Bügels gemäß der ersten Ausführungsform in Richtung des Pfeiles W in Fig. 1;

Fig. 7    einen Bügel gemäß einer zweiten Ausführungsform in einer Fig. 1 ähnlichen Darstellung;

Fig. 8    eine vergrößerte Schnittdarstellung einer Steckverbindung des Bügels gemäß der ersten Ausführungsform vor dem vollständigen Zusammenstecken eines Bügelschaftes und eines Bügelendstücks;

Fig. 9    eine Schnittdarstellung gemäß G-H in Fig. 8;

Fig. 10    eine Fig. 8 ähnliche Schnittdarstellung, die jedoch die Steckverbindung nach dem vollständigen Zusammenschieben zeigt;

Fig. 11    eine Schnittdarstellung gemäß J-K in Fig. 10; und

Fig. 12    eine Fig. 9 ähnliche Schnittdarstellung einer abgewandelten Ausführungsform.

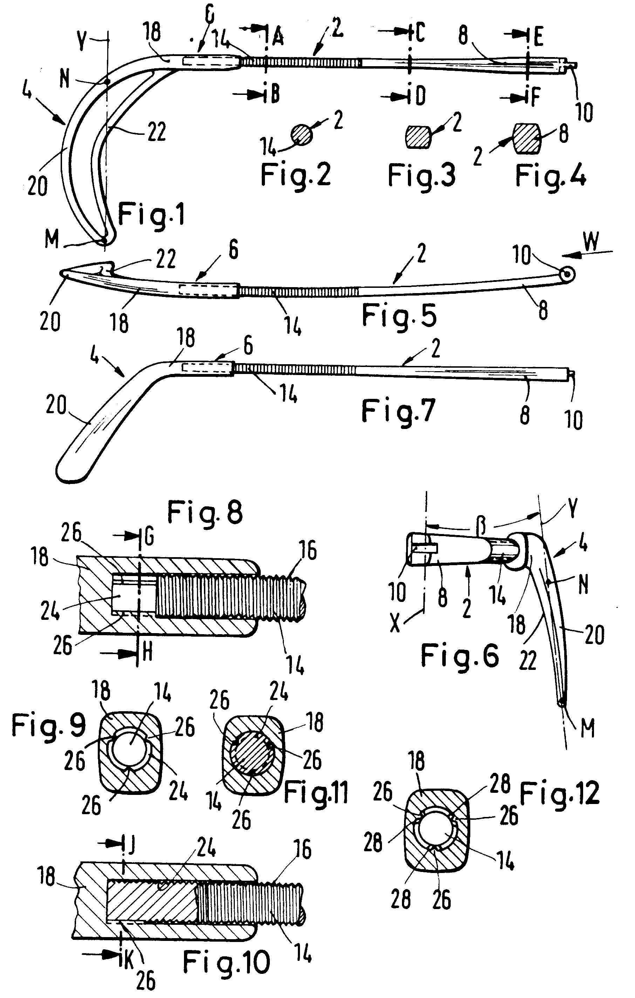

Der Bügel gemäß Fig. 1 umfaßt einen länglichen, im wesentlichen geraden Schaft 2 sowie ein Bügelendstück 4, das durch eine Steckverbindung 6 mit dem Schaft 2 fest verbunden ist.

Der Schaft 2 weist ein erstes Schaftende 8 auf, an dem ein Auge 10 ausgebildet ist, das zusammen mit weiteren, nicht dargestellten Elementen ein Scharnier bilden kann, mittels dessen der Bügel mit einer nicht dargestellten Backe oder einem nicht dargestellten Gelenkstück einer Brille verbindbar ist. Durch das Auge 10 und eine in diesem ausgebildete Scharnierbohrung 12 ist der Verlauf einer Scharnierachse X (siehe Fig. 6) festgelegt.

Das zweite, in den Fig. 1 und 2 linke Schaftende bildet einen Zapfen 14, der eine im wesentlichen zylindrische Umfangswand und somit ein Kreisprofil (siehe Fig. 2) hat. In der Umfangswand des zylindrischen Zapfens 14 sind zahlreiche umlaufende Rillen 16 und entsprechend viele Stege zwischen zwei benachbarten Rillen ausgebildet. Wie Fig. 8 erkennen läßt, ergibt sich durch de Rillen 16 und die Stege ein Sägezahnprofil auf der Umfangswand des Zapfens 14. Der auf diese Weise gerillte Abschnitt des Schaftes 2 erstreckt sich über ein Viertel bis zur Hälfte der gesamten Länge des Schaftes. Über die gerillte Länge hat der Schaft das Kreisprofil gemäß Fig. 2 mit konstantem Durchmesser. In Richtung zum ersten Schaftende 8 ändert sich danach das Profil des Schaftes 2 allmählich zu dem in Fig. 4 gezeigten Querschnitt in Form eines an seinen beiden Enden abgeflachten Ovals.

Wie insbesondere die Fig. 1 und 5 erkennen lassen, umfaßt das Bügelendstück 4 einen länglichen, im wesentlichen geraden ersten Abschnitt 18, der an seinem hinteren, in Fig. 1 linken Ende allmählich in einen gekrümmten, länglichen zweiten Abschnitt 20 übergeht. Bei dem in den Fig. 1 bis 5 dargestellten Ausführungsbeispiel geht der zweite Abschnitt 20 an seinem unteren Ende über in einen länglichen, gekrümmten Anlageabschnitt 22, der an seinem oberen Ende wiederum mit dem ersten Abschnitt 18 fest verbunden ist. Der erste Abschnitt 18 und der zweite Abschnitt 20 sind einstükkig miteinander ausgebildet und bilden eine verhältnismäßig steife Einheit. Der Anlageabschnitt 22 besteht vorzugsweise aus einem verhältnismäßig weichen, anschmiegsamen Material geringerer Steifigkeit, damit der Anlageabschnitt 22 am Ohr und/oder am Schädel des Brillenträgers möglichst ohne störende Druckspitzen anliegt. Der Werkstoff, aus dem der gesamte Schaft 2 sowie der erste Abschnitt 18 und der zweite Abschnitt 20 des Bügelendstücks 4 gefertigt sind, ist vorzugsweise ein Polyetherimid.

Wie insbesondere Fig. 5 erkennen läßt, sind sowohl der gesamte Schaft 2 als auch der erste Abschnitt 18 des Bügelendstücks 4 - bei Betrachtung von oben - etwas gekrümmt, damit der Bügel bei aufgesetzter Brille zum Kontaktbereich zwischen dem Bügelendstück und dem Schädel bzw. Ohr des Brillenträgers führt, ohne daß der Schaft 2 selber in Berührung mit dem Kopf des Brillenträgers kommt und ohne daß der erste Abschnitt 18 einen störenden seitlichen Druck auf den Schädel ausübt. Wie außer Fig. 5 insbesondere Fig. 6 erkennen läßt, weist das Bügelendstück 4 eine Innenneigung auf, die in Fig. 6 durch den Neigungswinkel $\beta$ verdeutlicht ist, den - in der Projektion gemäß Fig. 6 - die Scharnierachse X sowie eine durch zwei Punkte M und N (siehe Fig. 1) verlaufende Neigungsgerade Y zwischen sich einschließen.

Im folgenden wird unter Bezugnahme auf die Fig. 8 bis 11 die Steckverbindung 6 zwischen dem Bügelendstück 4 und dem Schaft 2 näher erläutert.

Diese Steckverbindung umfaßt außer dem Zapfen 14 eine im ersten Abschnitt 18 ausgebildete Bohrung 24, die eine zylindrische Umfangswand mit über die gesamte Länge der Bohrung 24 gleichem Durchmesser aufweist. Am in Fig. 8 linken Ende der Bohrung 24 sind drei in Axialrichtung der Bohrung verlaufende Leisten 26 ausgebildet, die radial in die Bohrung 24 hineinragen, in Umfangsrichtung gleiche Winkelabstände voneinander haben und beim dargestellten Ausführungsbeispiel ein dreieckiges Profil aufweisen, wie Fig. 9 erkennen läßt. In Axialrichtung der Bohrung 24 erstrekken sich die Leisten 26 lediglich über einen Bruchteil der Bohrungslänge, beispielsweise über 5 bis 10 % der Bohrungslänge. Der Innendurchmesser der Bohrung 24 und der Außendurchmesser des Zapfens 14 sind derart bemessen, daß der Zapfen 14 und die Bohrung 24 eine Spiel-oder Übergangspassung bilden.

Bevor das Bügelendstück 4 und der Schaft 2 zum Bügel zusammengefügt werden, wird der Schaft 2 auf die erforderliche Länge abgelängt, was dadurch erfolgt, daß vom Zapfen 14 ein solches Stück abgeschnitten wird, daß dann, wenn der Zapfen 14 vollständig in die Bohrung 24 eingeschoben ist, der Bügel die gewünschte bzw. erforderliche Länge hat.

Nach dem Ablängen des Schaftes 2 wird dessen Zapfen 14 in die Bohrung 24 eingeschoben, bis der in den Fig. 8 und 9 dargestellte Zustand erreicht ist. In diesem Zustand können der Bügel 2 und das Bügelendstück 4 relativ zueinander um die Bohrungsachse gedreht werden, ohne daß dieser Drehung ein nennenswerter Widerstand entgegensteht. Der Schaft 2 und das Bügelendstück 4 werden somit in diesem Zustand relativ zueinander in eine solche Drehstellung gebracht, daß der gewünschte bzw. geforderte Neigungswinkel $\beta$ vorhanden ist. Wenn dies der Fall ist, wird der Zapfen 14 aus der in Fig. 8 dargestellten Stellung in die in Fig. 10 dargestellte Stellung gebracht, d.h. vollständig in die Bohrung 24 eingeschoben. Dabei treten die drei Leisten 26 in Eingriff mit der Umfangswand des Zapfens 14, in die sie sich einschneiden und eindrücken. Dies geschieht unter gegenseitiger Verformung der drei Leisten 26 einerseits und der Stege zwischen den Rillen 16 andererseits, so daß sich der in den Fig. 10 und 11 dargestellte Zustand ergibt. Dabei ist die radial innere Kante jeder Leiste 26 zu einer Wellenlinie deformiert, wobei jede Leiste 26 dort am stärksten deformiert ist, wo sich ein Steg zwischen den Rillen 16 befindet, und dort am wenigsten deformiert ist, wo sich eine Rille 16 befindet. Weil sich auch die Leisten 26 in die Stege eindrücken, sind letztere im Bereich der Leisten 26 deformiert, wie Fig. 11 zeigt. Durch diese Deformierung ist ein Formschluß zustande gekommen, der einer Relativdrehung zwischen dem ersten Abschnitt 18 und dem Zapfen 14 um die Bohrungsachse einen erheblichen Widerstand entgegensetzt. Die schon erläuterte und in Fig. 10 gezeigte wellenförmige Deformation der Leisten 26 führt zu einer in Axialrichtung der Bohrung festen Verbindung, so daß durch diese "Verzahnung" die Steckverbindung sowohl in Axialrichtung als auch in Umfangsrichtung sehr fest ist. Wie sich aus der vorstehenden Beschreibung ergeben hat, ist zugleich dafür gesorgt, daß der Bügel die gewünschte Länge hat und daß das Bügelendstück die gewünschte bzw. erforderliche Innenneigung hat. Die Bügellänge und die Innenneigung können individuell für jeden Bügel anders und den Bedürfnissen des jeweiligen Brillenträgers angepaßt hergestellt sein.

Eine Abwandlung der Steckverbindung zeigt Fig. 12 in einer Fig. 9 ähnlichen Darstellung. Die Besonderheit der Abwandlung gemäß Fig. 12 besteht darin, daß in der Umfangswand des Zapfens 14 drei Längsnuten 28 ausgebildet sind, und zwar an den Leisten 26 entsprechenden Stellen. Dies ermöglicht es, den Zapfen 14 nach dem Ablängen zunächst vollständig in die Bohrung 24 einzuschieben, wobei während dessen die Leisten 26 in den Längsnuten 28 angeordnet sind, und erst danach den Bügel 2 und den ersten Abschnitt 18 relativ zueinander um die Bohrungsachse so weit zu verdrehen, bis der gewünschte Neigungswinkel $\beta$ eingestellt ist. Bei dieser Drehung treten dabei die Stege zwischen den Rillen 16 in Eingriff mit den Leisten 26, wobei sich die Stege und die Leisten 26 plastisch und elastisch gegenseitig verformen, so daß schließlich ein ähnlicher Verzahnungszustand entsteht, wie er vorstehend anhand der Fig. 10 und 11 erläutert ist.

Ein weiteres Ausführungsbeispiel der Erfindung zeigt Fig. 7. Dieses erläutert, daß das Bügelendstück nicht notwendigerweise die anhand der Fig. 1 und 5 erläuterte Ausbildung zu haben braucht. Vielmehr kann der Anlageabschnitt 22 des ersten Ausführungsbeispiels fehlen und kann der zweite Abschnitt 20 unmittelbar zur Anlage am Kopf des Brillenträgers bestimmt sein, wie dies bei sogenannten Golfbügeln der Fall ist. Im übrigen stimmt das Ausführungsbeispiel gemäß Fig. 7 mit dem Ausführungsbeispiel gemäß den Fig. 1 bis 5 überein.

Es versteht sich, daß vorstehend nur einige und nicht alle möglichen Ausführungsbeispiele der Erfindung erläutert sind und daß die Erfindung nicht auf die vorstehend beschriebenen Ausführungsbeispiele beschränkt ist.

**Patentansprüche**

1. Bügel für eine Brille, mit einem länglichen, im wesentlichen geraden Schaft (2), der an seinem ersten Schaftende mittels eines Scharniers mit einer Backe oder einem Gelenkstück der Brille verbindbar ist, und mit einem Bügelendstück (4), das einen Länglichen, im wesentlichen geraden ersten Abschnitt (18), der in Verlängerung des Schaftes verläuft, und einen sich an den ersten Abschnitt anschließenden, länglichen zweiten Abschnitt (20) aufweist, der vom ersten Abschnitt aus unter Einschluß eines Winkels kleiner als 180° nach unten verläuft, wobei der erste Abschnitt des Bügelendstücks, und das zweite Schaftende mittels einer Steckverbindung (6) miteinander verbunden sind, die eine Bohrung (24) im einen der Elemente, d.h. entweder im ersten Abschnitt (18) oder im Schaft) (2), einen in der Bohrung sitzenden Zapfen am anderen der beiden Elemente sowie eine Fixiereinrichtung aufweist, die den ersten Abschnitt (18) und das zweite Schaftende in ihrer Relativlage festhält, dadurch gekennzeichnet, daß von der Umfangswand der Bohrung (24) oder des Zapfens (14) radial zumindest eine in Axialrichtung der Bohrung verlaufende Leiste (26) vorsteht, die in die jeweils andere Umfangswand des Zapfens (14) bzw. der Bohrung (24) eingreift, die im wesentlichen zylindrisch ausgebildet ist.

2. Bügel nach Anspruch 1, dadurch gekennzeichnet, daß die zumindest eine Leiste am Zapfen ausgebildet ist.

3. Bügel nach Anspruch 2, dadurch gekennzeichnet, daß der Zapfen ein Profil in Form eines regelmäßigen Vielecks hat, wobei die dadurch bestimmten Kanten des Zapfens die Leisten bilden.

4. Bügel nach Anspruch 2 oder 3, dadurch gekennzeichnet, daß sich die zumindest eine Leiste nur über einen Teil der Länge des Zapfens erstreckt.

5. Bügel nach Anspruch 4, dadurch gekennzeichnet, daß die zumindest eine Leiste am Zapfen nahe dem offenen Bohrungsende ausgebildet ist und die Bohrung über ihre gesamte Länge einen im wesentlichen konstanten Durchmesser hat.

6. Bügel nach Anspruch 4, dadurch gekennzeichnet, daß die zumindest eine Leiste am freien Ende des Zapfens ausgebildet ist und die Bohrung im Bereich des freien Endes des Zapfens einen Abschnitt mit verringertem Durchmesser aufweist.

7. Bügel nach Anspruch 1, dadurch gekennzeichnet, daß die zumindest eine Leiste (26) von der Umfangswand der Bohrung (24) radial nach innen vorsteht.

8. Bügel nach Anspruch 7, dadurch gekennzeichnet, daß die Umfangswand der Bohrung (24) im wesentlichen zylindrisch ausgebildet ist und daß die Bohrung über ihre gesamte Länge einen im wesentlichen konstanten Durchmesser hat.

9. Bügel nach Anspruch 7 oder 8, dadurch gekennzeichnet, daß sich die zumindest eine Leiste (26) nur über einen Teil der Länge der Bohrung (24) erstreckt und im Bereich des freien Endes des Zapfens (14) ausgebildet ist.

10. Bügel nach einem der Ansprüche 1 bis 9, dadurch gekennzeichnet, daß drei Leisten (26) mit in Umfangsrichtung gleichen Abständen voneinander vorgesehen sind.

11. Bügel nach einem der Ansprüche 1 bis 10, dadurch gekennzeichnet, daß die im wesentlichen zylindrische Umfangswand, die nicht mit der zumindest einen Leiste versehen ist, mit zahlreichen umlaufenden Rillen (16) versehen ist.

12. Bügel nach Anspruch 11, dadurch gekennzeichnet, daß die Rillen (16) durch ein Gewinde gebildet sind.

13. Bügel nach Anspruch 11 oder 12, dadurch gekennzeichnet, daß die mit den Rillen (16) versehene Umfangswand Längsnuten (28) in gleicher Zahl und Anordnung wie Zahl und Anordnung der Leisten (26) aufweist.

14. Bügel nach einem der Ansprüche 1 bis 13, dadurch gekennzeichnet, daß der Zapfen (14) und die Umfangswand der Bohrung (24) aus einem Kunststoff bestehen.

15. Bügel nach einem der Ansprüche 1 bis 14, dadurch gekennzeichnet, daß die Bohrung (24) im ersten Abschnitt (18) des Bügelendstücks (4) ausgebildet ist und daß der Zapfen (14) durch das zweite Schaftende gebildet ist.

**Claims**

1. Side-arm for spectacles, having an elongated, essentially straight shaft (2), which, at its first shaft end, can be connected by means of a hinge to a jaw or hinged piece of the spectacles, and having a side-arm endpiece (4), which exhibits an elongated, essentially straight first section (18), running in an extension of the shaft, and an elongated second section (20) joined to the first section, which second section runs downwards from the first section at an angle of less than 180°, the first section of the side-arm endpiece and the second shaft end being connected to each other by means of a plug-in connection (6), which exhibits a bore (24) in the one of the elements, i.e. either in the first section (18) or in the shaft (2), a journal, seated in the bore, on the other of the two elements and a fixing device, securing the first section (18) and the second shaft end in their relative position, characterised in that at least one strip (26), running in the axial direction of the bore, protrudes radially from the peripheral wall of the bore (24) or of the journal (14), which strip engages respectively into the other peripheral wall of the journal (14) or of the bore (24), this wall being of essentially cylindrical configuration.

2. Side-arm according to Claim 1, characterised in that the at least one strip is configured on the journal.

3. Side-arm according to Claim 2, characterised in that the journal has a profile in the form of a regular polygon, the thereby determined edges of the journal forming the strips.

4. Side-arm according to Claim 2 or 3, characterised in that the at least one strip extends only over part of the length of the journal.

5. Side-arm according to Claim 4, characterised in that the at least one strip is configured on the journal near to the open bore end and the bore has an essentially constant diameter over its entire length.

6. Side-arm according to Claim 4, characterised in that the at least one strip is configured on the free end of the journal and the bore exhibits, in the area of the free end of the journal, a section of reduced diameter.

7. Side-arm according to Claim 1, characterised in that the at least one strip (26) protrudes radially inwards from the peripheral wall of the bore (24).

8. Side-arm according to Claim 7, characterised in that the peripheral wall of the bore (24) is of essentially cylindrical configuration and in that the bore has an essentially constant diameter over its entire length.

9. Side-arm according to Claim 7 or 8, characterised in that the at least one strip (26) extends only over part of the length of the bore (24) and is configured in the area of the free end of the journal (14).

10. Side-arm according to one of Claims 1 to 9, characterised in that three strips (26) are provided at equal distances from one another in the peripheral direction.

11. Side-arm according to one of Claims 1 to 10, characterised in that the essentially cylindrical peripheral wall, which is not provided with the at least one strip, is provided with a plurality of circumferential grooves (16).

12. Side-arm according to Claim 11, characterised in that the grooves (16) are formed by a thread.

13. Side-arm according to Claim 11 or 12, characterised in that the peripheral wall provided with the grooves (16) exhibits longitudinal slots (28) in the same number and arrangement as the number and arrangement of the strips (26).

14. Side-arm according to one of Claims 1 to 13, characterised in that the journal (14) and the peripheral wall of the bore (24) consist of a plastic.

15. Side-arm according to one of Claims 1 to 14, characterised in that the bore (24) is configured in the first section (18) of the side-arm endpiece (4) and in that the journal (14) is formed by the second shaft end.

## Revendications

1. Branche de lunettes comportant une tige (2) allongée, à peu près droite, qui à sa première extrémité est reliée, au moyen d'une charnière, à un côté ou une pièce d'articulation des lunettes, et comportant une pièce d'extrémité de branche (4) qui possède une première partie (18) allongée, à peu près droite, qui s'étend dans le prolongement de la tige ainsi qu'une seconde partie (20) allongée, se raccordant à la première et qui, à partir de cette première partie, s'étend vers le bas en formant un angle inférieur à 180°, la première partie de la pièce d'extrémité de branche et la seconde extrémité de la tige étant reliées entre elles au moyen d'un assemblage à emboîtement (6) qui présente un perçage (24), pratiqué dans l'un des éléments, c'est-à-dire soit dans la première partie (18) soit dans la tige (2), ainsi qu'un tenon placé dans le perçage, à l'autre des deux éléments et un dispositif de fixation qui maintient la première partie (18) et la seconde extrémité de tige dans leur position relative, caractérisée en ce que de la paroi du pourtour du perçage (24) ou du tenon (14) fait saillie radialement au moins une baguette (26) s'étendant dans la direction axiale du perçage et qui s'engage dans l'autre paroi périphérique, à peu près cylindrique, du tenon (14) ou du perçage (24).

2. Branche selon la revendication 1, caractérisée en ce qu'il est formé au moins une baguette sur le tenon.

3. Branche selon la revendication 2, caractérisée en ce que le tenon présente un profil ayant la forme d'un polygone régulier, les bords ainsi définis du tenon formant les baguettes.

4. Branche selon la revendication 2 ou 3, caractérisée en ce qu'une baguette au moins ne s'étend que sur une partie de la longueur du tenon.

5. Branche selon la revendication 4, caractérisée en ce qu'une baguette au moins est formée sur le tenon, à proximité de l'extrémité ouverte du perçage et le perçage présente un diamètre à peu près constant sur toute sa longueur.

6. Branche selon la revendication 4, caractérisée en ce qu'une baguette au moins est formée à l'extrémité libre du tenon et le perçage présente, dans la région de l'extrémité libre du tenon, une partie de diamètre réduit.

7. Branche selon la revendication 1, caractérisée en ce qu'une baguette (26) au moins fait saillie radialement vers l'intérieur à partir de la paroi périphérique du perçage (24).

8. Branche selon la revendication 7, caractérisée en ce que la paroi périphérique du perçage (24) est à peu près cylindrique et en ce que le perçage présente sur toute sa longueur un diamètre à peu près constant.

9. Branche selon la revendication 7 ou 8, caractérisée en ce qu'une baguette (26) au moins ne s'étend que sur une partie de la longueur du perçage (24) et est formée dans la région de l'extrémité libre du tenon (14).

10. Branche selon l'une des revendications 1 à 9, caractérisée en ce que trois baguettes (26) sont prévues régulièrement espacées les unes des autres dans la direction périphérique.

11. Branche selon l'une des revendications 1 à 10, caractérisée en ce que la paroi périphérique à peu près cylindrique qui n'est pas pourvue d'au moins une baguette, est dotée de nombreuses gorges (16) sur tout le pourtour.

12. Branche selon la revendication 11, caractérisée en ce que les gorges (16) sont formées par un filetage.

13. Branche selon la revendication 11 ou 12, caractérisée en ce que la paroi périphérique, pourvue des gorges (16), comporte des rainures longitudinales (28) en nombre égal à celui des baguettes (26) et disposées de la même façon que celles-ci.

14. Branche selon l'une des revendications 1 à 13, caractérisée en ce que le tenon (14) et la paroi périphérique du perçage (24) sont réalisés dans une matière plastique.

15. Branche selon l'une des revendications 1 à 14, caractérisée en ce que le perçage (24) est formé dans la première partie (18) de la pièce d'extrémité de branche (4) et en ce que le tenon (14) est formé par la seconde extrémité de la tige.

Fig.1

Fig.2

Fig.3

Fig.4

Fig.5

Fig.6

Fig.7

Fig. 8

Fig.9

Fig.11

Fig.12

Fig.10